(19) Europäisches Patentamt
European Patent Office
Office européen des brevets

(11) **EP 2 340 192 B1**

(12) **EUROPÄISCHE PATENTSCHRIFT**

(45) Veröffentlichungstag und Bekanntmachung des Hinweises auf die Patenterteilung:
**17.04.2013 Patentblatt 2013/16**

(21) Anmeldenummer: **09745000.1**

(22) Anmeldetag: **16.10.2009**

(51) Int Cl.:
**B62D 15/02** (2006.01)     **B60T 8/1755** (2006.01)

(86) Internationale Anmeldenummer:
**PCT/EP2009/063567**

(87) Internationale Veröffentlichungsnummer:
**WO 2010/043702 (22.04.2010 Gazette 2010/16)**

(54) **EINSCHLAGWINKELBESTIMMUNG FÜR EIN FAHRZEUG**

DETERMINATION OF A MAXIMUM STEERING ANGLE FOR A VEHICLE

DÉTERMINATION DE L'ANGLE DE BRAQUAGE POUR UN VÉHICULE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **17.10.2008 DE 102008052196**
**18.12.2008 DE 102008063567**

(43) Veröffentlichungstag der Anmeldung:
**06.07.2011 Patentblatt 2011/27**

(73) Patentinhaber: **Continental Teves AG & Co. oHG**
**60488 Frankfurt (DE)**

(72) Erfinder:
- **KOUKES, Vladimir**
  **64297 Darmstadt (DE)**
- **HERBST, Ralf**
  **56355 Nastätten (DE)**
- **NIEPELT, Mathias**
  **61169 Friedberg (DE)**
- **SCHMIDT, Robert**
  **65779 Kelkheim (DE)**
- **FÜHRER, Jochen**
  **64287 Darmstadt (DE)**

(56) Entgegenhaltungen:
WO-A2-2007/113332     DE-A1- 10 255 469
US-A1- 2004 024 565     US-A1- 2007 088 477

EP 2 340 192 B1

**Beschreibung**

Gebiet der Erfindung

Die Erfindung betrifft die Einschlagwinkel- oder Lenkwinkelbestimmung von Fahrzeugen. Insbesondere betrifft die Erfindung ein Einschlagwinkelbestimmungssystem zur Bestimmung eines Einschlagwinkels eines Fahrzeugs, ein Verfahren zur Bestimmung eines Einschlagwinkels eines Fahrzeugs, ein Programmelement sowie ein computerlesbares Medium.

Technologischer Hintergrund

Kostengünstige Sensoren für die Messung des Lenkradwinkels liefern relative Werte des Winkels bezogen zur Position des Lenkrades beim Zündungsstart des Fahrzeugs. Der gemessene Winkel des Lenkrades beim Zündungsstart ist allerdings im Regelfall bezüglich der Mittelstellung des Lenkrades verschoben (sog. Nullverschiebung oder Offset). Nach dem Start der Zündung zeigt der Sensor also zuerst unabhängig von der Lenkradposition einen Nullwert an, obwohl der Winkel nicht in jedem Fall gleich Null ist. Der Lenkwinkel muss jedoch genau (und absolut) gemessen werden, weil er im elektronischen Stabilitätsprogramm (ESP) benutzt wird und für die Sicherheit des Fahrzeugs von großer Bedeutung ist.

DE 697 14 806 T2 offenbart ein Verfahren zum Ermitteln der Stellung eines Lenkrades, bei dem die Mittelstellung des Lenkrades mit einem ersten vorgegebenen Algorithmus oder einem zweiten vorgegebenen Algorithmus geschätzt wird, je nachdem, ob ein berechneter Lenkradeinschlagwinkel innerhalb oder außerhalb eines bestimmten Intervalls liegt. Abhängig von dem verwendeten Algorithmus ergibt sich ein schnelleres oder langsameres Einpendeln auf einen Mittelstellungswert. WO2007113332 A offenbart ein system zur Berechnung des Einschlagwinkels auf basis der gemessenen Gierrate und des gemessenen Lenkwinkels. Zusammenfassung der Erfindung

Es ist eine Aufgabe der Erfindung, eine schnelle und genaue Bestimmung der Nullverschiebung des gemessenen Lenkwinkels und damit eine schnelle und genaue Bestimmung des tatsächlichen Einschlagwinkels bereitzustellen.

Es sind ein System zur Einschlagwinkelbestimmung, ein Verfahren zur Bestimmung eines Einschlagwinkels, ein Programmelement und ein computerlesbares Medium gemäß den Merkmalen der unabhängigen Ansprüche angegeben. Weiterbildungen der Erfindung ergeben sich aus den Unteransprüchen.

Die beschriebenen Ausführungsbeispiele betreffen gleichermaßen das Einschlagwinkelbestimmungssystem, das Verfahren, das Programmelement und das computerlesbare Medium. In anderen Worten lassen sich die im Folgenden im Hinblick auf das Einschlagwinkelbestimmungssystem genannten Merkmale auch in dem Verfahren, dem Programmelement oder dem computerlesbaren Medium implementieren, und umgekehrt.

Gemäß einem Ausführungsbeispiel der Erfindung ist ein Einschlagwinkelbestimmungssystem zur Bestimmung eines Einschlagwinkels eines Fahrzeugs angegeben, welches eine Sensoranordnung und eine Steuereinheit aufweist. Die Sensoranordnung dient der Messung einer Gierrate und eines Lenkwinkels des Fahrzeugs. Aus dem gemessenen Lenkwinkel ergibt sich in Kenntnis der Lenkübersetzung der (somit zumindest indirekt) gemessene Einschlagwinkel. Die Steuereinheit ist ausgeführt zur Berechnung des Einschlagwinkels auf Basis der gemessenen Gierrate und des gemessenen Lenkwinkels. Weiterhin ist die Steuereinheit zur Berechnung einer zeitlichen Ableitung des gemessenen Einschlagwinkels und einer zeitlichen Ableitung des berechneten Einschlagwinkels sowie zur Bestimmung, ob eine erste Abweichung zwischen der Ableitung des gemessenen Einschlagwinkels und der Ableitung des berechneten Einschlagwinkels unterhalb einer ersten vorbestimmten Schwelle liegt, ausgeführt.

Weiterhin dient die Steuereinheit zur Durchführung einer Korrektur des gemessenen Einschlagwinkels auf Basis des berechneten Einschlagwinkels, insbesondere wenn die erste Abweichung unterhalb der ersten Schwelle liegt. Wenn die erste Abweichung nicht unterhalb der ersten Schwelle liegt, sondern darüber, werden die Messung der Gierrate und des Lenkwinkels sowie die sich daran anschließenden Berechnungen wiederholt.

Aber selbst wenn die erste Abweichung nicht unterhalb der ersten Schwelle liegt kann der Einschlagwinkel trotzdem korrigiert werden. Der korrigierte Wert bzw. die berechnete Nullverschiebung wird zusammen mit den Informationen bezüglich der Güte der Korrektur (also z.B. die erste Abweichung und ggf. weitere Werte wie Vertrauensintervall und Standardabweichung der Nullverschiebung) an entsprechende Fahrzeugsysteme weitergegeben (z.B. an das ESP). Diese Systeme können dann in einem ersten Schritt den berechneten Wert verwenden, und wissen gleichzeitig, wie "gut" dieser Wert ist. Später wird den Systemen dann ein neu berechneter Wert (unter Zuhilfenahme weiterer Messwerte) geliefert. In anderen Worten wird den Systemen bereits ab einem sehr frühen Zeitpunkt ein brauchbarer Wert für die Nullverschiebung bereitgestellt, der dann immer wieder verbessert wird. Nach und gegebenenfalls während der Übergabe werden weitere Messwerte erfasst, so dass neue, genauere Berechnungen stattfinden können. Die neuen Werte (Nullverschiebung, erste Abweichung und ggf. weitere Werte wie Vertrauensintervall und Standardabweichung der Nullverschiebung) werden wieder an die Fahrzeugsysteme übergeben, so dass sich das Verfahren dem tatsächlichen Wert für die Nullverschiebung annähert.

Es ist zu beachten, dass, wenn im Folgenden von Einschlagwinkel oder Lenkwinkel die Rede ist, diese Begriffe synonym verwendet werden können, da der Einschlagwinkel direkt aus dem Lenkwinkel berechnet werden kann, und umgekehrt.

Letztendlich ist es also nicht wesentlich, ob Messdaten bezüglich des Lenkwinkels oder Messdaten bezüglich des Einschlagwinkels bereitgestellt werden.

Beispielsweise wird der Einschlagwinkel unter Verwendung des sog. Einspurmodells bestimmt. Der Einschlagwinkel wird allerdings nur dann berechnet, wenn die Messwerte "gut genug" sind, wenn also das Modell hinreichend gut anwendbar ist (gültig ist). Um dies zu entscheiden, wird überprüft, ob die zeitlichen Ableitungen zwischen dem gemessenen Einschlagwinkel und dem berechneten Einschlagwinkel nahe genug beisammen liegen. Sind die Unterschiede zu groß, übersteigen also eine bestimmte Schwelle, müssen weitere Messungen erfolgen.

Gemäß einem weiteren Ausführungsbeispiel der Erfindung ist die Steuereinheit weiterhin ausgeführt zur Bestimmung, ob eine zweite Abweichung zwischen einem ersten gemessenen Einschlagwinkel (bzw. ersten Lenkwinkel) und einem zeitlich darauf folgenden zweiten gemessenen Einschlagwinkel (bzw. einem zeitlich darauf folgenden zweiten gemessenen Lenkwinkel) unterhalb einer zweiten vorbestimmten Schwelle liegt. Weiterhin wird die Korrektur des gemessenen Einschlagwinkels auf Basis des berechneten Einschlagwinkels nur dann durchgeführt, wenn die zweite Abweichung unterhalb der zweiten Schwelle liegt. Andernfalls wird die Messung wiederholt. Ebenso werden die darauf folgenden Berechnungen wiederholt, bis auch diese zweite Bedingung erfüllt ist.

Es wird also bestimmt, ob die Güte der Messungen des Lenkwinkels bzw. des Einschlagwinkels ausreichend hoch ist.

Dies muss nicht zwingend dadurch geschehen, dass die Unterschiede zwischen benachbarten Messwerten mit einem Schwellwert verglichen werden. Zur Abschätzung, ob die Güte der Messung ausreicht, kann auch verifiziert werden, dass der Messwert nicht außerhalb eines bestimmten Bereich liegt, z. B. $|\delta| < S$. Außerdem kann ein Mittelwert über ein bestimmtes, verhältnismäßig kurzes Zeitintervall gebildet werden. Der Messwert darf sich von diesem Mittelwert nicht viel unterscheiden. Auch kann zusätzlich kontrolliert werden, ob der Sensor fehlerfrei funktioniert.

Gemäß einem weiteren Ausführungsbeispiel der Erfindung ist die Steuereinheit weiterhin zur Ermittlung einer gemittelten Nullverschiebung eines Sensors der Sensoranordnung zur Messung des Einschlagwinkels auf Basis einer Mittelung mehrerer berechneter Nullverschiebungen über die Zeit ausgeführt. Weiterhin ist die Steuereinheit zur Korrektur des gemessenen Einschlagwinkels auf Basis der gemittelten Nullverschiebung ausgeführt.

Alternativ kann, gemäß einem weiteren Ausführungsbeispiel der Erfindung, eine gefilterte Nullverschiebung des Sensors der Sensoranordnung auf Basis einer Filterung der gemessenen Gierrate und des gemessenen Einschlagwinkels erfolgen, woraufhin der gemessene Einschlagwinkel auf Basis der gefilterten Nullverschiebung korrigiert wird.

Dies kann dann vorteilhaft sein, wenn nicht genügend Speicherplatz für die Speicherung der für die Mittelwertbildung notwendigen Messwerte zur Verfügung steht.

Gemäß einem weiteren Ausführungsbeispiel der Erfindung wird die Korrektur des gemessenen Einschlagwinkels nur dann vorgenommen, wenn eine geschätzte Standardabweichung der berechneten oder gefilterten Nullverschiebungen innerhalb einer vorbestimmten dritten Schwelle liegt.

Weiterhin kann neben der Standardabweichung auch das sogenannte Vertrauensintervall berechnet werden. Standardabweichung und Vertrauensintervall werden bereits nach kurzer Zeit seit Beginn des Verfahrens, also in der Regel seit Einschalten der Zündung (also z.B. nach der Verarbeitung von zwei oder drei Messwerten) zum ersten Mal berechnet. Die berechnete Nullverschiebung, die Standardabweichung und das Vertrauensintervall werden dann den entsprechenden Fahrzeugsystemen (z.B. ESP, Fahrzeugkontrollsysteme) übergeben. Gleichzeitig bzw. danach werden weitere Messwerte erfasst, so dass neue, genauere Berechnungen stattfinden können. Die neuen Werte (Nullverschiebung, Standardabweichung und Vertrauensintervall) werden wieder an die Fahrzeugsysteme übergeben, so dass sich das Verfahren dem tatsächlichen Wert für die Nullverschiebung annähert.

Gemäß einem weiteren Ausführungsbeispiel der Erfindung werden die Messungen und die darauf folgenden Berechnungen wiederholt, wenn die geschätzte Standardabweichung der berechneten oder gefilterten Nullverschiebungen oberhalb der dritten Schwelle liegt.

Gemäß einem weiteren Ausführungsbeispiel der Erfindung wird die Filterung mit einer erhöhten Filterkonstante wiederholt, wenn die geschätzte Standardabweichung oberhalb der dritten Schwelle liegt.

Gemäß einem weiteren Ausführungsbeispiel der Erfindung ist die Steuereinheit ein ESP-Steuergerät.

Gemäß einem weiteren Ausführungsbeispiel der Erfindung ist ein Fahrzeug mit einem oben beschriebenen Einschlagwinkelbestimmungssystem angegeben.

Gemäß einem weiteren Ausführungsbeispiel der Erfindung ist ein Verfahren zur Bestimmung eines Einschlagwinkels eines Fahrzeugs angegeben, bei dem eine Gierrate und ein Lenkwinkel des Fahrzeugs gemessen wird, wobei sich aus dem gemessenen Lenkwinkel ein (gemessener) Einschlagwinkel ergibt. Weiterhin erfolgt eine Berechnung des Einschlagwinkels auf Basis der gemessenen Gierrate und des gemessenen Lenkwinkels. Auch wird die zeitliche Ableitung des gemessenen Einschlagwinkels und die zeitliche Ableitung des berechneten Einschlagwinkels berechnet. Daraufhin erfolgt eine Bestimmung, ob eine erste Abweichung zwischen der Ableitung des gemessenen Einschlagwinkels und der Ableitung des berechneten Einschlagwinkels unterhalb einer ersten vorbestimmten Schwelle liegt. Wenn die erste Abweichung unterhalb der ersten Schwelle liegt, erfolgt eine Korrektur des gemessenen Einschlagwinkels auf Basis des berechneten Einschlagwinkels. Falls die erste Abweichung oberhalb der ersten Schwelle liegt, werden die Messungen und die darauf folgenden Berechnungen wiederholt.

Gemäß einem weiteren Ausführungsbeispiel der Erfindung ist ein Programmelement angegeben, das, wenn es auf einem Prozessor ausgeführt wird, den Prozessor anleitet, die oben angegebenen Verfahrensschritte durchzuführen.

Gemäß einem weiteren Ausführungsbeispiel der Erfindung ist ein computerlesbares Medium angegeben, auf dem ein Programmelement gespeichert ist, das, wenn es auf einem Prozessor ausgeführt wird, den Prozessor anleitet, die oben angegebenen Verfahrensschritte durchzuführen.

Dabei kann das Programmelement z. B. Teil einer Software sein, die auf einem Prozessor eines ESP-Steuergeräts gespeichert ist. Der Prozessor kann dabei ebenso Gegenstand der Erfindung sein. Weiterhin umfasst dieses Ausführungsbeispiel der Erfindung ein Programmelement, welches schon von Anfang an die Erfindung verwendet, sowie auch ein Programmelement, welches durch eine Aktualisierung (Update) ein bestehendes Programm zur Verwendung der Erfindung veranlasst.

Im Folgenden werden mit Verweis auf die Figuren Ausführungsbeispiele der Erfindung beschrieben.

Kurze Beschreibung der Figuren

Fig. 1 zeigt ein Einschlagwinkelbestimmungssystem gemäß einem Ausführungsbeispiel der Erfindung.
Fig. 2 zeigt ein Flussdiagramm eines Verfahrens gemäß einem Ausführungsbeispiel der Erfindung.

Detaillierte Beschreibung von Ausführungsbeispielen

Die Darstellungen in den Figuren sind schematisch und nicht maßstäblich.

In der folgenden Figurenbeschreibung werden für die gleichen oder ähnlichen Elemente die gleichen Bezugsziffern verwendet.

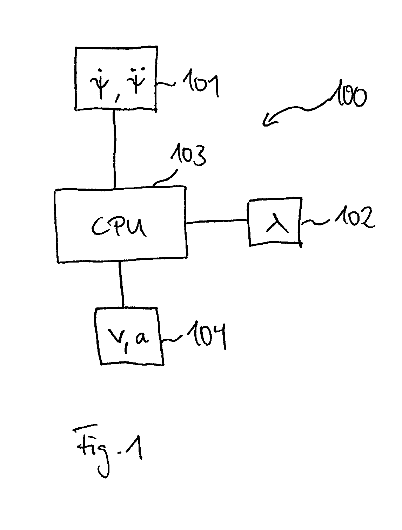

Fig. 1 zeigt ein Einschlagwinkelbestimmungssystem 100, welches neben einer Steuereinheit 103, die beispielsweise in Form einer CPU ausgeführt ist, mehrere Sensoren 101, 102, 104 aufweist.

Der Sensor 101 dient der Messung der Gierrate des Fahrzeugs. Außerdem misst der Sensor 101 die zeitliche Ableitung der Gierrate. Auch können hierfür mehrere Sensoren vorgesehen sein. Auch ist es möglich, dass die zeitliche Ableitung der Gierrate nicht gemessen sondern berechnet wird, beispielsweise durch die Steuereinheit 103.

Der Sensor 102 misst den (relativen) Lenkwinkel des Fahrzeugs und der Sensor 104 misst die Fahrzeuggeschwindigkeit und/oder dessen Beschleunigung. Die Beschleunigung kann alternativ auch aus dem zeitlichen Verlauf der gemessenen Fahrzeuggeschwindigkeit berechnet werden.

Die Steuereinheit 103 dient der Berechnung des Lenkwinkels bzw. des Einschlagwinkels und zur Korrektur der Nullverschiebung. Eine theoretische, modellbasierte Berechnung des Lenkwinkels ist insbesondere dann wichtig, wenn das Fahrzeug in der Anfahrtsphase nach dem Zündungsstart einige Zeit lang konstant in eine Richtung (links oder rechts) fährt, die Lenkung also eingeschlagen ist.

Die Nullverschiebung des Lenkwinkels und die Korrektur der Messergebnisse basieren auf dem sog. einspurigen Modell des Fahrzeugs (vgl. auch Zomotor, Adam, Fahrwerktechnik: Fahrverhalten; Vogel 1987).

Beim einspurigen Modell wird der Zusammenhang zwischen dem Einschlagwinkel und der Gierrate verwendet. Ein Lenkwinkel ist mit dem Einschlagwinkel $\delta_0$ (z. B. der Vorderradeinschlagwinkel) verbunden:

$$\delta_0 = \lambda / K \qquad\qquad (1)$$

$\lambda$ - Lenkwinkel
K - Lenkübersetzung

Laut dem einspurigen Modell des Fahrzeugs kann der Zusammenhang zwischen dem Einschlagwinkel und der Gierrate wie folgt beschrieben werden:

$$\delta_{theoret} = \frac{\ddot{\psi} * l}{V} + EG * \dot{\psi} * V \qquad (2)$$

$\delta_{theoret}$ - theoretisch ermittelte Einschlagwinkel
l - Radstand
V - Geschwindigkeit
$\dot{\psi}$ - Gierrate
EG - Eigenlenkgradient (ist im Rahmen des Einspurmodells ein Fahrzeugparameter).

Das Verhältnis (2) darf in der Regel nur bei bestimmten begrenzten Bedingungen benutzt werden, z.B.[ vgl. M. Mitschke; Dynamik der Kraftfahrzeuge; Band C; Springer-Verlag 1990]:

1. Fahrgeschwindigkeit V = const. (keine Beschleunigung in Fahrzeuglängsrichtung).

2. Zwei Freiheitsgrade: Gierbewegung und Schwimmbewegung.

3. Keine Wankbewegung, keine Radlastdifferenz zwischen kurveninneren und kurvenäußeren Rad einer Achse.

4. Keine Hub- und Nickbewegung, konstante Radlasten an Vorder- und Hinterachse.

5. Die Radaufstandspunkte, an denen die zur Kurshaltung erforderlichen Seitenkräfte der Reifen angreifen, werden achsweise in der Fahrzeugmitte zusammengefasst.

6. Kleine Lenk- und Schräglaufwinkel, linearisierte Seitenkraftkennlinien an den Reifen.

7. Die Reifennachläufe und Rückstellmomente infolge der Schräglaufwinkel werden vernachlässigt.

8. Keine Umfangskräfte an den Reifen. (Die Bedingung V = const. erfordert Längskräfte, die jedoch bei kleinen Einschlagwinkeln vernachlässigt werden können.)

Bei der Berechnung des Einschlagwinkels und der Korrektur der Messergebnisse des Einschlagwinkelsensors ist es erforderlich darauf zu achten, dass das Verhältnis (2) bzw. das Einspurmodell gültig ist. Andernfalls wird die Korrektur fehlerhaft.

Für die Überwachung des Fahrzeugzustands und der Fahrbedingungen wird eine zeitliche Ableitung $\frac{d\delta}{dt} = \dot{\delta}$ des gemessenen Einschlagwinkels berechnet. Von (2) folgt für die theoretische zeitliche Ableitung:

$$\left(\frac{d\delta}{dt}\right)_{theoret} = \dot{\delta}_{theoret} = \frac{\ddot{\psi} * l}{V} + \frac{a * \dot{\psi}}{V^2} + EG * (\ddot{\psi} * V + a * \dot{\psi}) \qquad (3)$$

wobei $\ddot{\psi}$ die Gierbeschleunigung und
a die Fahrzeugbeschleunigung ist.
Eine zeitliche Ableitung des gemessenen Einschlagwinkels wird nicht von der Nullverschiebung beeinflusst. Falls das Verhältnis (3) gültig ist, dürfen die gemessenen und berechneten Werte nur kleine Unterschiede haben:

$$\left| \frac{\dot{\lambda}}{K} - \frac{\ddot{\psi} * l}{V} - \frac{a * \dot{\psi}}{V^2} - EG * (\ddot{\psi} * V + a * \dot{\psi}) \right| < \varepsilon$$

$$(4)$$

wobei $\varepsilon$ ein kleiner Schwellenwert ist.

Die Berechnung nach (4) wird auf der Basis von den verfügbaren gemessenen oder berechneten Werten $\delta, \dot{\delta}$, $\dot{\psi}, \ddot{\psi}, \boldsymbol{V}, \alpha$ in einem ESC Steuergerät gemacht. Außerdem wird überwacht, ob die gemessenen Werte keine zu große Sprünge haben, z.B.:

$$|\lambda_n - \lambda_{n-1}| < \varepsilon 1 \qquad\qquad (5)$$

$\lambda_{n-1}$ - gemessener Lenkwinkel in der Messung n - 1;
$\lambda_n$ - gemessener Lenkwinkel in der Messung n;
und wobei $\varepsilon 1$ ein kleiner, vorbestimmter Schwellenwert ist.

Wenn (4) und (5) erfüllt sind, darf der Rollwinkel nach (2) berechnet werden. In diesem Fall werden die theoretischen Werte $\delta_{theoret}$ für die Korrektur der gemessenen Werte des Einschlagwinkels benutzt.

Der gemessene Lenkwinkel wird wie folgt geschrieben:

$$\lambda = \Delta + (\frac{\dot{\psi} * l}{V} + EG * \ddot{\psi} * V) * K \qquad\qquad (6)$$

wobei $\Delta$ die Nullverschiebung des Sensors ist.

Die Ergebnisse von N Messungen werden summiert und für die Ermittlung der Nullverschiebung des Sensors benutzt:

$$A = \sum_{i=1}^{N} \lambda_i;$$

$$B = \sum_{i=1}^{N} \frac{\dot{\psi}_i * l}{V_i};$$

$$D = \sum_{i=1}^{N} \dot{\psi}_i * V_i;$$

$$\overline{\Delta}_N = \frac{1}{N} * (A - B * K - EG * C * K)$$

$$(7)$$

wobei $\overline{\Delta}_N$ ein über die Zeit gemittelter Wert der Nullverschiebung ist.

Für diesen Wert wird eine Einschätzung für die Standartabweichung $\sigma$ und den Vertrauensinterwall $p*\sigma_N$ berechnet:

$$\sigma_N = \frac{\sum_{i=1}^{N}(\Delta_i - \overline{\Delta}_N)^2}{N-1}$$

$$(8)$$

$$\overline{\Delta}_N - p*\sigma_N \le \Delta \le \overline{\Delta}_N + p*\sigma_N$$

wobei p = p(N) ein empirischer Parameter und von N abhängig ist.

Das Vertrauensintervall $p*\sigma_N$ wird im ESP für die adaptive Parameteränderung des Kontrollsystems benutzt.

Es wird überprüft, ob $\sigma_N$ klein genug ist:

$$\sigma_N < S_0 \qquad\qquad (9)$$

wobei $S_0$ ein Parameter ist, der abhängig von den Anforderungen des ESC festgelegt wird.

Wenn $\sigma_N$ zu groß ist, werden die Messungen weiter durchgeführt und die Berechnungen wie in den Gleichungen (7) bis (8) für die nächsten Messungen wiederholt.

Es werden so lange ähnliche Schritte wiederholt, bis der Wert $\sigma$ klein genug wird (das Verhältnis der Gleichung (9) ist also gültig).

Der korrigierte Lenkwinkel wird wie folgt berechnet:

$$\lambda_0 = \lambda - \overline{\Delta}_N \qquad\qquad (10)$$

Um die oben beschriebene Methode benutzen zu können ist es erforderlich, N Messwerte V, $\dot{\psi}$ und $\lambda$ in einem Speicher beizubehalten. Wenn dies nicht möglich ist, kann eine andere, vereinfachte Methode benutzt werden. Statt der Mittelwertbildung wird ein Tiefpassfilter mit einer Filterkonstante F benutzt:

$$A = Filt_F(\delta_i);$$

$$B = Filt_F(\frac{\dot{\psi}_i}{V_i}*l)$$

$$D = Filt_F(\dot{\psi}*V_i);$$

$$\widetilde{\Delta}_F = (A - B*K - EG*C*K)$$

$$(11)$$

wobei $\widetilde{\Delta}_F$ ein gefilterter Wert der Nullverschiebung ist.

Die Einschätzungen für die Standartabweichung und den Vertrauensintervall werden wie in (8) berechnet:

$$\sigma_F = \frac{\sum_{i=1}^{F}(\Delta_i - \widetilde{\Delta}_F)^2}{F-1}$$

$$(12)$$

$$\widetilde{\Delta}_F - p*\sigma_F \le \Delta \le \widetilde{\Delta}_F + p*\sigma_F$$

Falls die eingeschätzte Standartabweichung zu groß ist ($\sigma_F$ >So), wird die Filterkonstante so lange stufenweise erhöht, bis dieser Wert klein genug wird ($\sigma_F < S_0$). Der korrigierte Lenkwinkel wird wie folgt berechnet:

$$\lambda_0 = \lambda - \widetilde{\Delta}_F \qquad\qquad\qquad (13)$$

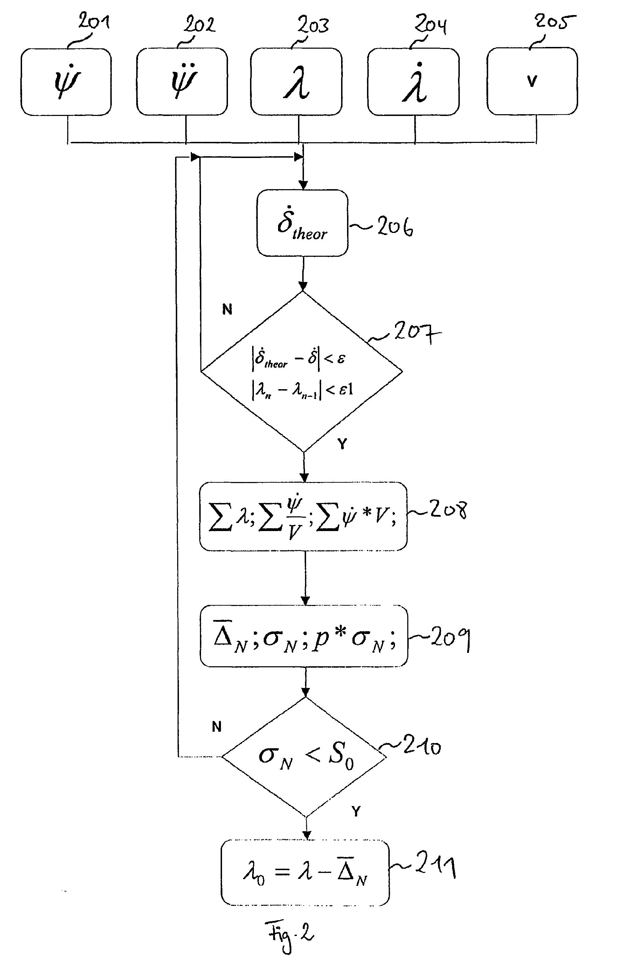

Fig. 2 zeigt ein Flussdiagramm eines Verfahrens gemäß einem Ausführungsbeispiel der Erfindung. Die Gierrate 201, die zeitliche Ableitung der Gierrate 202, der Lenkwinkel 203, die zeitliche Änderung des Lenkwinkels 204 sowie die Fahrzeuggeschwindigkeit 205 bzw. die Fahrzeugbeschleunigung fließen in die Berechnung der theoretischen zeitlichen Ableitung des Einschlagwinkels 206 ein.

Hierbei werden beispielsweise die Gierrate 201, der Lenkwinkel 203 sowie die Fahrzeuggeschwindigkeit 205 gemessen. Die zeitliche Ableitung der Gierrate 202 sowie die Beschleunigung des Fahrzeugs sowie die zeitliche Ableitung des Lenkwinkels 204 können berechnet oder alternativ auch gemessen werden.

In Schritt 207 werden dann die Differenzen zwischen der theoretischen zeitlichen Ableitung des Einschlagwinkels und der gemessenen zeitlichen Ableitung des Einschlagwinkels mit einem ersten Schwellwert $\varepsilon$ und die Differenz benachbarter gemessener Lenkwinkel mit einem zweiten Schwellwert $\varepsilon 1$ verglichen.

Liegen diese Differenzen jeweils unterhalb dem entsprechenden Schwellwert werden in Schritt 208 weitere Berechnungen durchgeführt. Liegt zumindest eine dieser Differenzen nicht unterhalb des entsprechenden Schwellwertes, werden weitere Messwerte hinzugezogen und das Verfahren mit Schritt 206 fortgeführt.

Sind allerdings die Bedingungen (4) und (5) erfüllt, werden in Schritt 208 die Ergebnisse aus N Messungen summiert (siehe auch Gleichung (7)).

In Schritt 209 erfolgt dann die Berechnung der zeitlich gemittelten Nullverschiebung, der Standardabweichung sowie des Vertrauensintervalls.

In Schritt 210 wird dann bestimmt, ob die Standardabweichung klein genug ist, also unterhalb eines bestimmten Schwellwerts liegt. Ist die Standardabweichung zu groß, werden weitere Messwerte hinzugezogen und die Berechnung 206 gefolgt von den Schritten 207 bis 210 erneut durchgeführt.

Liegt die Standardabweichung unterhalb des vorbestimmten Schwellwerts, wird in Schritt 211 der korrigierte Lenkwinkel durch die Gleichung (10) berechnet.

Alternativ zur Mittelwertbildung kann auch ein Tiefpassfilter mit einer Filterkonstante eingesetzt werden (siehe Gleichungen (11), (12) und (13)).

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Einschlagwinkelbestimmungssystem zur Bestimmung eines Einschlagwinkels eines Fahrzeugs, das Einschlagwinkelbestimmungssystem (100)aufweisend:

   Sensoranordnung (101, 102) zur Messung einer Gierrate und eines Lenkwinkels des Fahrzeugs, woraus sich ein gemessener Einschlagwinkel ergibt;
   Steuereinheit (103), ausgeführt zur:

   Berechnung des Einschlagwinkels auf Basis der gemessenen Gierrate und des gemessenen Lenkwinkels;
   Berechnung einer zeitlichen Ableitung des gemessenen Einschlagwinkels und einer zeitlichen Ableitung des berechneten Einschlagwinkels;
   Bestimmung, ob eine erste Abweichung zwischen der Ableitung des gemessenen Einschlagwinkels und der Ableitung des berechneten Einschlagwinkels unterhalb einer ersten vorbestimmten Schwelle liegt;
   Korrektur des gemessenen Einschlagwinkels auf Basis des berechneten Einschlagwinkels; und
   Wiederholung der Messung und der darauffolgenden Berechnungen, wenn die erste Abweichung oberhalb der ersten Schwelle liegt.

2. Einschlagwinkelbestimmungssystem nach Anspruch 1,
   wobei die Steuereinheit (103) weiterhin ausgeführt ist zur:

Bestimmung, ob eine zweite Abweichung zwischen einem ersten gemessenen Einschlagwinkel und einem zeitlich darauffolgenden zweiten gemessenen Einschlagwinkel unterhalb einer zweiten vorbestimmten Schwelle liegt; und

Wiederholung der Messung und der darauffolgenden Berechnungen, wenn die zweite Abweichung oberhalb der zweiten Schwelle liegt.

3. Einschlagwinkelbestimmungssystem nach einem der vorhergehenden Ansprüche,
wobei die Steuereinheit (103) weiterhin ausgeführt ist zur:

Ermittlung einer gemittelten Nullverschiebung eines Sensors (101) der Sensoranordnung (101, 102) zur Messung des Einschlagwinkels auf Basis einer Mittelung mehrerer berechneter Nullverschiebungen über die Zeit;
Korrektur des gemessenen Einschlagwinkels auf Basis der gemittelten Nullverschiebung.

4. Einschlagwinkelbestimmungssystem nach Anspruch 1 oder 2,
wobei die Steuereinheit (103) weiterhin ausgeführt ist zur:

Ermittlung einer gefilterten Nullverschiebung eines Sensors (101) der Sensoranordnung (101, 102) zur Messung des Einschlagwinkels auf Basis einer Filterung der gemessenen Gierrate und des gemessenen Einschlagwinkels;
Korrektur des gemessenen Einschlagwinkels auf Basis der gefilterten Nullverschiebung.

5. Einschlagwinkelbestimmungssystem nach Anspruch 3 oder 4,
wobei die Messungen und der darauffolgenden Berechnungen wiederholt werden, wenn eine geschätzte Standardabweichung der berechneten oder gefilterten Nullverschiebungen oberhalb einer vorbestimmten dritten Schwelle liegt.

6. Einschlagwinkelbestimmungssystem nach Anspruch 5,
wobei die Filterung mit einer erhöhten Filterkonstante wiederholt wird, wenn die geschätzte Standardabweichung oberhalb der dritten Schwelle liegt.

7. Einschlagwinkelbestimmungssystem nach einem der Ansprüche 5 bis 6,
wobei weiterhin ein Vertrauensintervall hinsichtlich der Nullverschiebungen berechnet wird;
wobei die Standardabweichung, das Vertrauensintervall und die entsprechende Nullverschiebung von einem ESP Steuergerät zur Fahrerassistenz weiterverwendet werden, selbst wenn das Vertrauensintervall und die Standardabweichung nicht unterhalb der vorbestimmten Schwellen liegen.

8. Einschlagwinkelbestimmungssystem nach einem der vorhergehenden Ansprüche,
wobei die Steuereinheit (103) ein ESP Steuergerät ist.

9. Fahrzeug mit einem Einschlagwinkelbestimmungssystem nach einem der Ansprüche 1 bis 8.

10. Verfahren zur Bestimmung eines Einschlagwinkels eines Fahrzeugs, das Verfahren aufweisend die Schritte:

Messung einer Gierrate und eines Lenkwinkels des Fahrzeugs, woraus sich ein gemessener Einschlagwinkel ergibt;
Berechnung des Einschlagwinkels auf Basis der gemessenen Gierrate und des gemessenen Lenkwinkels;
Berechnung einer zeitlichen Ableitung des gemessenen Einschlagwinkels und einer zeitlichen Ableitung des berechneten Einschlagwinkels;
Bestimmung, ob eine erste Abweichung zwischen der Ableitung des gemessenen Einschlagwinkels und der Ableitung des berechneten Einschlagwinkels unterhalb einer ersten vorbestimmten Schwelle liegt;
Korrektur des gemessenen Einschlagwinkels auf Basis des berechneten Einschlagwinkels; und
Wiederholung der Messung und der darauffolgenden Berechnungen, wenn die erste Abweichung oberhalb der ersten Schwelle liegt.

11. Programmelement, das, wenn es auf einem Prozessor ausgeführt wird, den Prozessor anleitet, die folgenden Schritte durchzuführen:

Berechnung eines Einschlagwinkels eines Fahrzeugs auf Basis einer gemessenen Gierrate und eines gemessenen Lenkwinkels, woraus sich ein gemessener Einschlagwinkel ergibt;

Berechnung einer zeitlichen Ableitung des gemessenen Einschlagwinkels und einer zeitlichen Ableitung des berechneten Einschlagwinkels;

Bestimmung, ob eine erste Abweichung zwischen der Ableitung des gemessenen Einschlagwinkels und der Ableitung des berechneten Einschlagwinkels unterhalb einer ersten vorbestimmten Schwelle liegt;

Korrektur des gemessenen Einschlagwinkels auf Basis des berechneten Einschlagwinkels; und

Wiederholung der Messung und der darauffolgenden Berechnungen, wenn die erste Abweichung oberhalb der ersten Schwelle liegt.

12. Computerlesbares Medium, auf dem ein Programmelement gespeichert ist, das, wenn es auf einem Prozessor ausgeführt wird, den Prozessor anleitet, die folgenden Schritte durchzuführen:

Berechnung eines Einschlagwinkels eines Fahrzeugs auf Basis einer gemessenen Gierrate und eines gemessenen Lenkwinkels, woraus sich ein gemessener Einschlagwinkel ergibt;

Berechnung einer zeitlichen Ableitung des gemessenen Einschlagwinkels und einer zeitlichen Ableitung des berechneten Einschlagwinkels;

Bestimmung, ob eine erste Abweichung zwischen der Ableitung des gemessenen Einschlagwinkels und der Ableitung des berechneten Einschlagwinkels unterhalb einer ersten vorbestimmten Schwelle liegt;

Korrektur des gemessenen Einschlagwinkels auf Basis des berechneten Einschlagwinkels, wenn die erste Abweichung unterhalb der ersten Schwelle liegt; und

Wiederholung der Messung und der darauffolgenden Berechnungen, wenn die erste Abweichung oberhalb der ersten Schwelle liegt.

## Claims

1. System for determining a steering lock angle of a vehicle, the system (100) for determining a steering lock angle having:

a sensor arrangement (101, 102) for measuring a yaw rate and a steering angle of the vehicle, from which a measured steering lock angle is obtained;

a control unit (103), designed to:

calculate the steering lock angle on the basis of the measured yaw rate and the measured steering angle;

calculate a time derivative of the measured steering lock angle and a time derivative of the calculated steering lock angle;

determine whether a first deviation between the derivative of the measured steering lock angle and the derivative of the calculated steering lock angle is below a first predetermined threshold;

correct the measured steering lock angle on the basis of the calculated steering lock angle; and

repeat the measurement and the subsequent calculations if the first deviation is above the first threshold.

2. System for determining a steering lock angle according to Claim 1,
   wherein the control unit (103) is also designed to:

determine whether a second deviation between a first measured steering lock angle and a chronologically subsequent, second measured steering lock angle is below a second predetermined threshold; and

repeat the measurement and the subsequent calculations if the second deviation is above the second threshold.

3. System for determining a steering lock angle according to one of the preceding claims,
   wherein the control unit (103) is also designed to:

determine an averaged zero point shift of a sensor (101) of the sensor arrangement (101, 102) for measuring the steering lock angle on the basis of averaging of a plurality of calculated zero point shifts over time; and

correct the measured steering lock angle on the basis of the averaged zero point shift.

4. System for determining a steering lock angle according to Claim 1 or 2,
   wherein the control unit (103) is also designed to:

determine a filtered zero point shift of a sensor (101) of the sensor arrangement (101, 102) for measuring the steering lock angle on the basis of filtering of the measured yaw rate and of the measured steering lock angle; and correct the measured steering lock angle on the basis of the filtered zero point shift.

5. System for determining a steering lock angle according to Claim 3 or 4,
   wherein the measurements and the subsequent calculations are repeated if an estimated standard deviation of the calculated or filtered zero point shifts is above a predetermined third threshold.

6. System for determining a steering lock angle according to Claim 5,
   wherein the filtering is repeated with an increased filter constant if the estimated standard deviation is above the third threshold.

7. System for determining a steering lock angle according to one of Claims 5 to 6,
   wherein a trust interval with respect to the zero point shifts is also calculated;
   wherein the standard deviation, the trust interval and the corresponding zero point shift are used further by an ESP control unit for the purpose of driver assistance, even if the trust interval and the standard deviation are not below the predetermined thresholds.

8. System for determining a steering lock angle according to one of the preceding claims,
   wherein the control unit (103) is an ESP control unit.

9. Vehicle having a system for determining a steering lock angle according to one of Claims 1 to 8.

10. Method for determining a steering lock angle of a vehicle, the method having the steps:

    measurement of a yaw rate and a steering angle of the vehicle, from which a measured steering lock angle is obtained;
    calculation of the steering lock angle on the basis of the measured yaw rate and of the measured steering angle;
    calculation of a time derivative of the measured steering lock angle and of a time derivative of the calculated steering lock angle;
    determination of whether a first deviation between the derivative of the measured steering lock angle and the derivative of the calculated steering lock angle is below a first predetermined threshold;
    correction of the measured steering lock angle on the basis of the calculated steering lock angle; and
    repetition of the measurement and of the subsequent calculations if the first deviation is above the first threshold.

11. Program element which, when it is executed on a processor, induces the processor to carry out the following steps:

    calculation of a steering lock angle of a vehicle on the basis of a measured yaw rate and of a measured steering angle, from which a measured steering lock angle is obtained;
    calculation of a time derivative of the measured steering lock angle and of a time derivative of the calculated steering lock angle;
    determination of whether a first deviation between the derivative of the measured steering lock angle and the derivative of the calculated steering lock angle is below a first predetermined threshold;
    correction of the measured steering lock angle on the basis of the calculated steering lock angle; and
    repetition of the measurement and of the subsequent calculations if the first deviation is above the first threshold.

12. Computer-readable medium on which a program element is stored, which element, when it is executed on a processor, induces the processor to carry out the following steps:

    calculation of a steering lock angle of a vehicle on the basis of a measured yaw rate and of a measured steering angle, from which a measured steering lock angle is obtained;
    calculation of a time derivative of the measured steering lock angle and of a time derivative of the calculated steering lock angle;
    determination of whether a first deviation between the derivative of the measured steering lock angle and the derivative of the calculated steering lock angle is below a first predetermined threshold;
    correction of the measured steering lock angle on the basis of the calculated steering lock angle if the first deviation is below the first threshold; and
    repetition of the measurement and of the subsequent calculations if the first deviation is above the first threshold.

## Revendications

1. Système de détermination de l'angle de braquage, destiné à déterminer l'angle de braquage d'un véhicule, le système (100) de détermination de l'angle de braquage présentant :

   un ensemble (101, 102) de détecteurs qui mesure la vitesse de lacet et l'angle de direction du véhicule, ce qui donne un angle de braquage mesuré,
   une unité de commande (103) configurée pour
   calculer l'angle de braquage sur base de l'angle de lacet mesuré et de l'angle de direction mesuré,
   calculer la dérivée par rapport au temps de l'angle de braquage mesuré et la dérivée par rapport au temps de l'angle de braquage calculé,
   déterminer si un premier écart entre la dérivée de l'angle de braquage mesuré et la dérivée de l'angle de braquage calculé est situé en dessous d'un premier seuil prédéterminé,
   déterminer l'angle de braquage mesuré sur base de l'angle de braquage calculé et
   répéter la mesure et les calculs qui la suivent lorsque le premier écart est situé au-dessus du premier seuil.

2. Système de détermination de l'angle de braquage selon la revendication 1, dans lequel l'unité de commande (103) est en outre configurée pour :

   déterminer si un premier écart entre un premier angle de braquage mesuré et un deuxième angle de braquage mesuré qui le suit dans le temps est situé en dessous d'un deuxième seuil prédéterminé et
   répéter la mesure et les calculs qui la suivent lorsque le deuxième écart est situé au-dessus du deuxième seuil.

3. Système de détermination de l'angle de braquage selon l'une des revendications précédentes, dans lequel l'unité de commande (103) est en outre configurée pour
   déterminer un décalage moyen vers zéro d'un détecteur (101) de l'ensemble (101, 102) de détecteurs destiné à mesurer l'angle de braquage sur base du calcul de la moyenne de plusieurs déplacements vers zéro calculés en fonction du temps et
   corriger l'angle de braquage mesuré sur la base du déplacement moyen vers zéro.

4. Système de détermination de l'angle de braquage selon les revendications 1 ou 2, dans lequel l'unité de commande (103) est en outre configurée pour :

   déterminer un décalage filtré vers zéro d'un détecteur (101) de l'ensemble (101, 102) de détecteurs en vue de mesurer l'angle de braquage sur la base du filtrage de la vitesse de lacet mesurée et de l'angle de braquage mesuré et
   corriger l'angle de braquage mesuré sur la base du décalage filtré vers zéro.

5. Système de détermination de l'angle de braquage selon les revendications 3 ou 4, dans lequel les mesures et les calculs qui les suivent sont répétés lorsque l'écart type estimé entre le décalage calculé vers zéro et le décalage filtré vers zéro sont situés au-dessus d'un troisième seuil prédéterminé.

6. Système de détermination de l'angle de braquage selon la revendication 5, dans lequel le filtrage est répété à une constante de filtrage plus élevée lorsque l'écart type estimé est situé au-dessus du troisième seuil.

7. Système de détermination de l'angle de braquage selon l'une des revendications 5 à 6, dans lequel
   un intervalle de confiance des décalages vers zéro est en outre calculé et
   dans lequel l'écart type, l'intervalle de confiance et le décalage vers zéro qui y correspond sont utilisés par un appareil de commande ESP pour l'assistance au conducteur même si l'intervalle de confiance et l'écart type ne sont pas situés en dessous du seuil prédéterminé.

8. Système de détermination de l'angle de braquage selon l'une des revendications précédentes, dans lequel l'unité de commande (103) est un appareil de commande ESP.

9. Véhicule doté d'un système de détermination de l'angle de braquage selon l'une des revendications 1 à 8.

10. Procédé de détermination de l'angle de braquage d'un véhicule, le procédé comportant les étapes qui consistent à :

mesurer la vitesse de lacet et l'angle de direction du véhicule, pour obtenir un angle de braquage mesuré,
calculer l'angle de braquage sur la base de la vitesse de lacet mesurée et de l'angle de direction mesuré,
calculer la dérivée par rapport au temps de l'angle de braquage mesuré et la dérivée par rapport au temps de l'angle de braquage calculé,
déterminer si un premier écart entre la dérivée de l'angle de braquage mesuré et la dérivée de l'angle de braquage calculé est situé en dessous d'un premier seuil prédéterminé,
corriger l'angle de braquage mesuré sur la base de l'angle de braquage calculé et
répéter la mesure et les calculs qui la suivent lorsque le premier écart est situé au-dessus du premier seuil.

11. Elément de programme qui, lorsqu'il est exécuté sur un processeur, amène le processeur à exécuter les étapes suivantes :

calculer l'angle de braquage d'un véhicule sur la base de la vitesse de lacet mesurée et l'angle de direction mesuré, ce qui fournit un angle de braquage mesuré
calculer la dérivée par rapport au temps de l'angle de braquage mesuré et la dérivée par rapport au temps de l'angle de braquage calculé,
déterminer si un premier écart entre la dérivée de l'angle de braquage mesuré et la dérivée de l'angle de braquage calculé est situé en dessous d'un premier seuil prédéterminé,
corriger l'angle de braquage mesuré sur la base de l'angle de braquage calculé et
répéter la mesure et les calculs qui la suivent lorsque le premier écart est situé au-dessus du premier seuil.

12. Support lisible par ordinateur et sur lequel est conservé un élément de programme qui, lorsqu'il est exécuté sur un processeur, amène le processeur à exécuter les étapes suivantes :

calculer l'angle de braquage d'un véhicule sur la base de la vitesse de lacet mesurée et l'angle de direction mesuré, ce qui fournit un angle de braquage mesuré
calculer la dérivée par rapport au temps de l'angle de braquage mesuré et la dérivée par rapport au temps de l'angle de braquage calculé,
déterminer si un premier écart entre la dérivée de l'angle de braquage mesuré et la dérivée de l'angle de braquage calculé est situé en dessous d'un premier seuil prédéterminé,
corriger l'angle de braquage mesuré sur la base de l'angle de braquage calculé et
répéter la mesure et les calculs qui la suivent lorsque le premier écart est situé au-dessus du premier seuil.

Fig. 1

201
202
203
204
205

$\dot{\psi}$   $\ddot{\psi}$   $\lambda$   $\dot{\lambda}$   V

$\dot{\delta}_{theor}$  ~206

**N**

$\left|\dot{\delta}_{theor} - \dot{\delta}\right| < \varepsilon$
$\left|\lambda_n - \lambda_{n-1}\right| < \varepsilon1$   ~207

**Y**

$\sum \lambda; \sum \dfrac{\dot{\psi}}{V}; \sum \dot{\psi} * V;$  ~208

$\overline{\Delta}_N; \sigma_N; p * \sigma_N;$  ~209

**N**

$\sigma_N < S_0$  ~210

**Y**

$\lambda_0 = \lambda - \overline{\Delta}_N$  ~211

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69714806 T2
- WO 2007113332 A